# EUROPEAN PATENT APPLICATION

(11) **EP 1 657 863 A2**
(43) Date of publication of application: **17.05.2006**
(21) Application number: 05256902.7
(22) Date of filing: 08.11.2005
(51) Int. Cl.: H04L 12/56, H04Q 7/24, H04L 29/06

(54) **Route selecting method and apparatus**

(30) Priority: 11.11.2004 KR 2004091905
(71) Applicant: Samsung Electronics Co., Ltd., Suwon-si, Gyeonggi-Do (KR)
(72) Inventor: Lee, Hak-goo, 544-704 Shinnamusil 5-danji, Suwon-si, Gyeonggi-do (KR)
(74) Representative: Waddington, Richard

(57) **Abstract**

Provided is a communication method and apparatus in an Internet protocol version 6 environment. A route selecting method includes transmitting messages, which are used to test communications between a mobile node (5) and a correspondent node (8) and into which options fields for measuring values changed according to routes (670,680,780) between the mobile node (5) and the correspondent node (8) are inserted, via the routes (670,680,780); receiving reply messages to the transmitted messages via the routes (670,680,780); and selecting any one of the routes (670,680,780) based on values of the options fields inserted into the received reply messages. In the method, a mobile node (5) and a correspondent node (8) do not always communicate directly with each other. The mobile node (5) and the correspondent node (8) can select an efficient route in consideration of hop counts and round trip times and communicate with each other through the selected route.

## Description

The present invention relates generally to a communication method and apparatus in an Internet protocol version 6 (IPv6) environment. More particularly, embodiments of the present invention relate to a route selecting method and apparatus in an IPv6 environment.

In an Internet Protocol version 4 environment (IPv4), a mobile node moved to a foreign link communicates with a correspondent node always through a home agent in a home link, thereby overloading the home agent and causing triangle routing. To solve such problems, in an IPv6 environment, a mobile node communicates directly with a correspondent node without using a home agent.

For direct communication between a mobile node and a correspondent node, a binding procedure is required for the correspondent node. A binding procedure is a process in which a mobile node matches a care-of address (COA) assigned by a foreign agent in a foreign link with a home address assigned by a home agent. Such a binding procedure is required for a correspondent node since the correspondent node only recognizes a home address of a mobile node, which is a unique address of the mobile node, as an address of the mobile node.

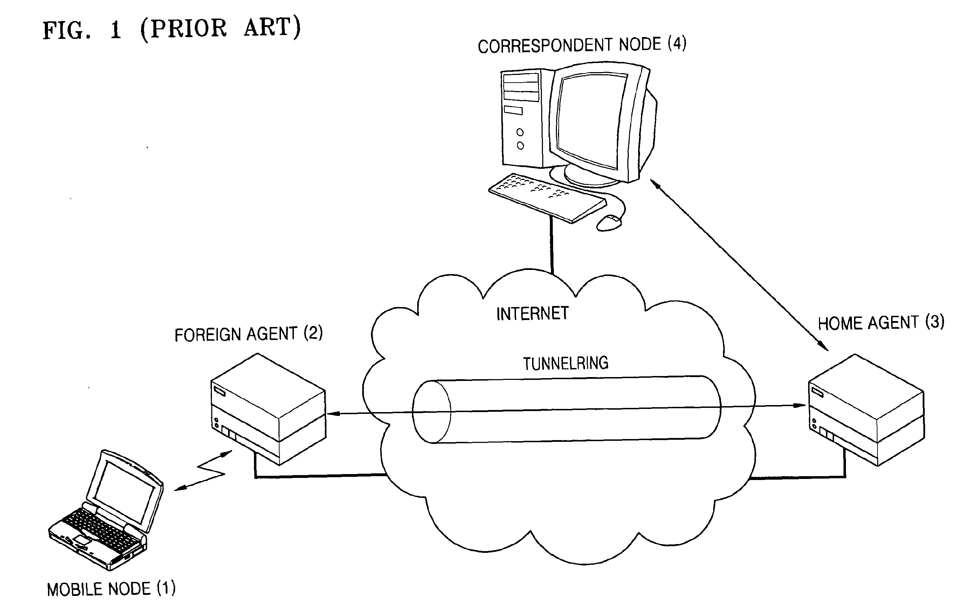

FIG. 1 is a schematic representation of a conventional network system before a binding procedure is performed according to the conventional IPv6 standard. Referring to FIG. 1, the conventional network system includes a mobile node 1, a foreign agent 2, a home agent 3, and a correspondent node 4. Before the binding procedure is performed on the correspondent node 4 according to the conventional IPv6 standard, the mobile node 1 communicates with the correspondent node 4 using a tunnel ring of the home agent 3. In other words, the mobile node 1 communicates with the correspondent node 4 through the home agent 3.

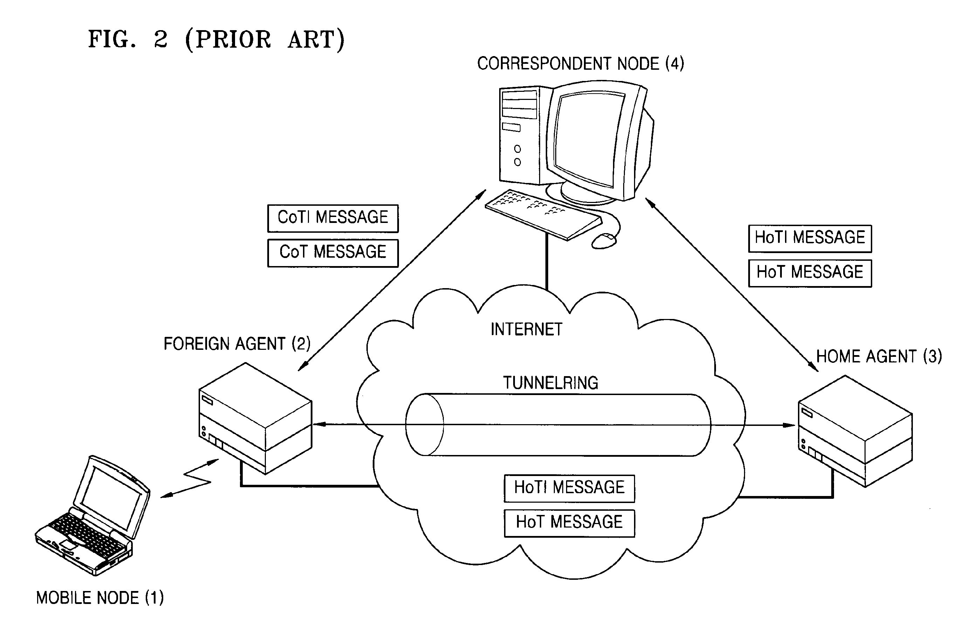

However, when the correspondent node 4 intends to directly communicate with the mobile node 1 without using the home agent 3, the correspondent node 4 cannot trust the mobile node 1 since direct communication is not made through the home agent 3. To solve this problem, a return routability (RR) procedure for authenticating the mobile node 1 is performed before the binding procedure is performed on the correspondent node 4. The RR procedure is specified in the Internet Society's Request for Comments (RFC) 3775. FIG. 2 is a schematic representation of a conventional network system performing a return routability (RR) procedure according to the conventional IPv6 standard. Referring to FIG. 2, the mobile node 1 transmits a home test init (HoTI) message to the correspondent node 4 through the foreign agent 2 and the home agent 3 and receives a home test (HoT) message from the correspondent node 4. In addition, the mobile node 1 transmits a care-of test init (CoTI) message to the correspondent node 4 only through the foreign agent 2 and receives a care-of test (CoT) message from the correspondent node 4. When keygen tokens are included in the HoT message and the CoT message received by the mobile node 1 from the correspondent node 4, the RR procedure is terminated.

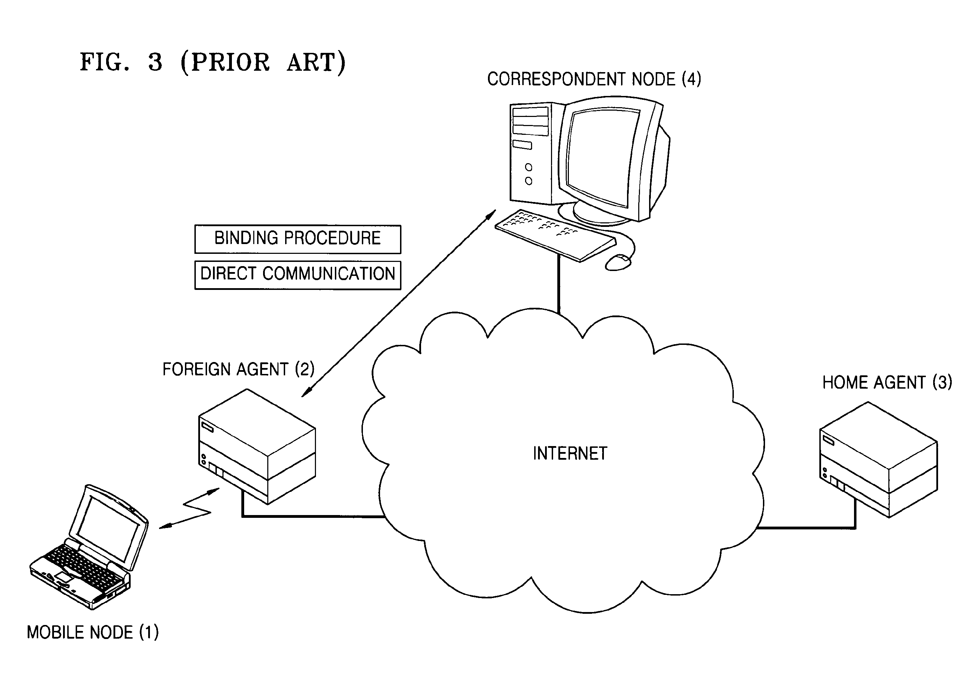

FIG. 3 is a schematic representation of a conventional network system performing a binding procedure according to the IPv6 standard. Referring to FIG. 3, the mobile node 1, which has successfully performed the RR procedure, directly performs the binding procedure on the correspondent node 4 without using the home agent 3. After successfully performing the binding procedure, the mobile node 1 directly communicates with the correspondent node 4 without using the home agent 3.

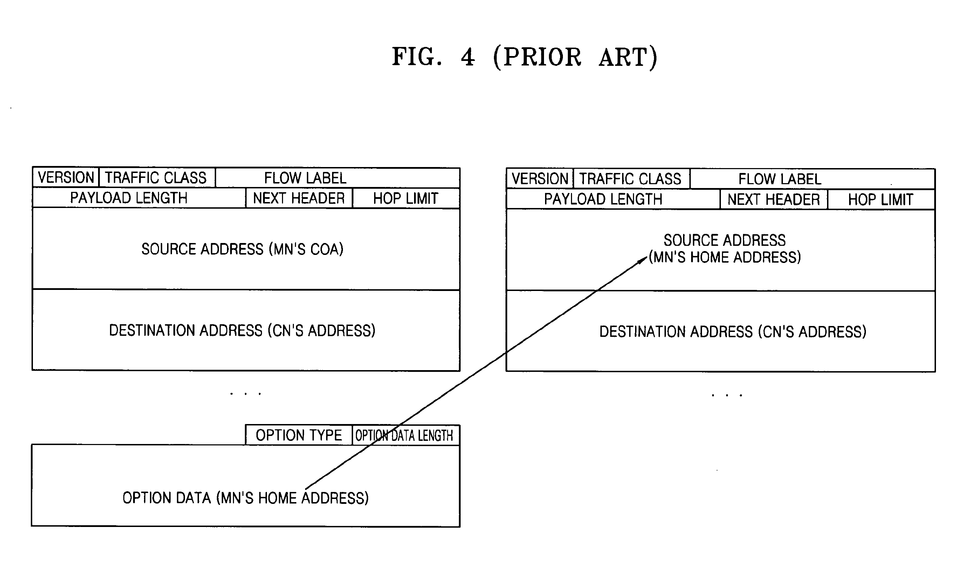

FIG. 4 is a schematic representation of an IPv6 packet format transmitted directly from a mobile node 1 to a correspondent node 4 according to the conventional IPv6 standard. Referring to FIG. 4, a source address of the IPv6 packet transmitted directly from the mobile node 1 to the correspondent node 4 is the COA of the mobile node 1, and a destination address of the IPv6 packet is the address of the correspondent node 4. Since the correspondent node 4 only recognizes the address of the mobile node 1 if it is a home address, i.e., a unique address, the IPv6 packet includes a destination option header, which is a kind of IPv6 extension header. The home address of the mobile node 1 is recorded in an option data field of the destination option header.

The correspondent node 4, which receives the IPv6 packet, records the home address recorded in the option data field of the destination option header in the source address according to the IPv6 standard and thus recognizes the home address as the source address.

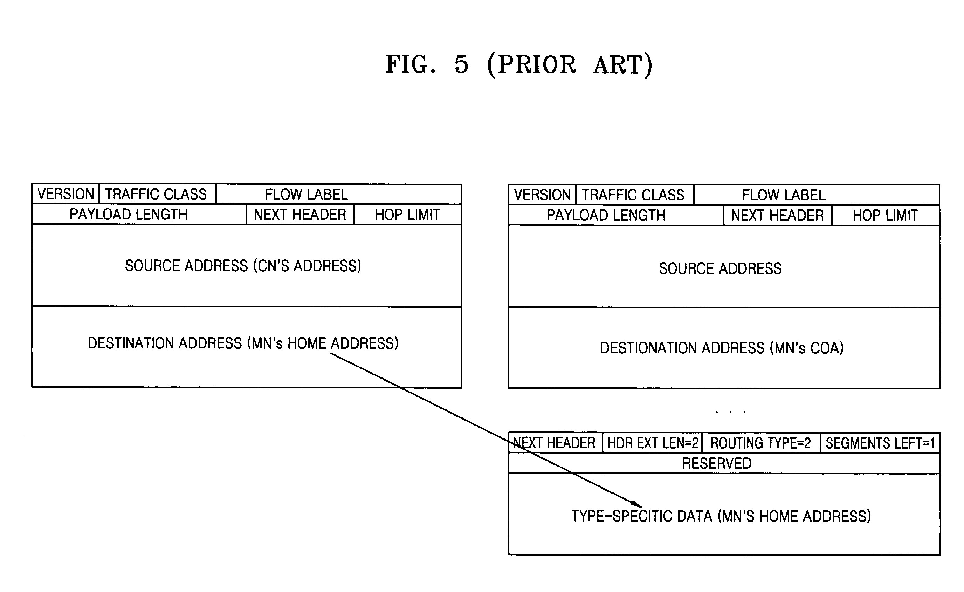

FIG. 5 is a schematic representation of a format of an IPv6 packet format transmitted directly from a correspondent node 4 to a mobile node 1 according to the conventional IPv6 standard. Referring to FIG. 5, the source address of the IPv6 packet transmitted directly from the correspondent node 4 to the mobile node 1 is the address of the correspondent node 4 and the destination address of the IPv6 packet is the home address of the mobile node 1.

Since the current address of the mobile node 1 is the COA, the correspondent node 4 intending to transmit the IPv6 packet records the COA of the mobile node 1 in a destination address field according to the IPv6 standard. In this case, the IPv6 packet includes a routing header, which is one kind of the IPv6 extension header, and the home address of the mobile node 1 is recorded in a specific data field of this routing header type.

As described above, when the mobile node 1 and the correspondent node 4 directly communicate with each other, the load of the home agent 3 may be reduced. However, the mobile node 1 and the correspondent node 4 must perform the procedures illustrated in FIGS. 3, 4, and 5. In other words, according to the conventional art, while the load of the home agent 3 decreases, the loads of the mobile node 1 and the correspondent node 4 increase. Considering that as a compact device, the mobile node 1 does not show superior system performance, it is not desirable to transfer the load of the home agent 3 to the mobile node 1. In addition, since the correspondent node 4 is usually a server, a plurality of nodes access the correspondent node 4. Hence, it is also undesirable to transfer the load of the home agent 3 to the correspondent node 4.

The present invention provides apparatuses and methods which can reduce the load of a mobile node, whose system performance may not be high, as well as the load of a correspondent node corresponding to a server that a plurality of nodes may access.

The present invention also provides a computer-readable recording medium on which a program for executing the methods is recorded.

According to the present invention there is provided an apparatus and method as set forth in the appended claims. Preferred features of the invention will be apparent from the dependent claims, and the description which follows.

According to an aspect of the present invention, there is provided a route selecting method including:
transmitting messages, which test communications between a mobile node and a correspondent node and into which options fields to measure values changed according to routes between the mobile node and the correspondent node are inserted, via the routes;
receiving reply messages to the transmitted messages via the routes; and
selecting any one of the routes based on values of the options fields inserted into the received reply messages.

According to another aspect of the present invention, there is provided a route selecting apparatus including:
a message transmitting unit (54/55) operable to transmit messages, which messages are adapted to test communications between a mobile node and a correspondent node and into which messages options fields to measure values changed according to routes between the mobile node and the correspondent node are adapted to be inserted, via the routes;
a message receiving unit operable to receive reply messages to the messages transmitted from the message transmitting unit (54/55) via the routes; and
a route selecting unit (510) operable to select any one of the routes based on values of the options fields inserted into the reply messages received by the message receiving unit.

According to another aspect of the present invention, there is provided a computer-readable recording medium on which a program for executing a route selecting method on a computer is recorded.

According to another aspect of the present invention, there is provided a message relaying method including:
receiving messages, which messages test communications between a mobile node and a correspondent node and into which options fields to measure values changed according to routes between the mobile node and the correspondent node are inserted, via a first portion of a predetermined route;
transmitting the same kind of messages as the received messages via a second portion of the predetermined route;
receiving reply messages to the transmitted messages via the second portion of the predetermined route; and
transmitting the received reply messages as reply messages to the messages via the first portion of the predetermined route.

According to another aspect of the present invention, there is provided a message relaying apparatus including:
a message receiving unit operable to receive messages, which messages are adapted to test communications between a mobile node and a correspondent node and into which messages options fields to measure values changed according to routes between the mobile node and the correspondent node are inserted, via a first portion of a predetermined route;
a message transmitting unit (54/55) for transmitting the same kind of messages as the messages received by the message receiving unit via a second portion of the predetermined route;
a reply message receiving unit for receiving reply messages to the transmitted messages from the message transmitting unit via the second portion of the predetermined route; and
a reply message transmitting unit for transmitting the reply messages received by the reply message receiving unit as reply messages to the messages via the first portion of the predetermined route.

According to another aspect of the present invention, there is provided a computer-readable recording medium on which a program for executing a message relaying method on a computer is recorded.

According to another aspect of the present invention, there is provided a reply message transmitting method including:
receiving messages, which messages test communications between a mobile node and a correspondent node and into which messages options fields to measure values changed according to routes between the mobile node and the correspondent node are inserted, via the routes; and
transmitting reply messages to the received messages.

According to another aspect of the present invention, there is provided reply message transmitting apparatus including:
a message receiving unit for receiving messages, which messages are adapted to test communications between a mobile node and a correspondent node and into which messages options fields to measure values changed according to routes between the mobile node and the correspondent node are inserted, via the routes; and
a reply message transmitting unit operable to transmit reply messages to the messages received by the message receiving unit.

According to another aspect of the present invention, there is provided a computer-readable recording medium on which a program for executing a reply message transmitting method on a computer is recorded.

According to another aspect of the present invention, there is provided a communication method including:
transmitting messages, which messages test communications between a mobile node and a correspondent node and into which messages options fields to measure values changed according to routes between the mobile node and the correspondent node are inserted, via the routes;
receiving the transmitted messages, updating values of options fields of the received messages, and transmitting reply messages including the options fields having the updated values via the routes; and
selecting any one of the routes based on the updated values of the options fields inserted into the transmitted reply messages.

According to another aspect of the present invention, there is provided a computer-readable recording medium on which a program for executing a communication method on a computer is recorded.

Additional aspects and/or advantages of the invention will be set forth in part in the description which follows and, in part, will be apparent from the description, or may be learned by practice of the invention.

For a better understanding of the invention, and to show how embodiments of the same may be carried into effect, reference will now be made, by way of example, to the accompanying diagrammatic drawings in which:
FIG. 1 is a schematic representation of a conventional network system before a binding procedure is performed according to the conventional Internet protocol version 6 (IPv6) standard;
FIG. 2 is a schematic representation of a conventional network system performing a return routability (RR) procedure according to the conventional IPv6 standard;
FIG. 3 is a schematic representation of a conventional network system performing a binding procedure according to the IPv6 standard;
FIG. 4 is a schematic representation of a format of an IPv6 packet transmitted directly from a mobile node to a correspondent node according to the conventional IPv6 standard;
FIG. 5 is a schematic representation of a format of an IPv6 packet transmitted directly from a correspondent node to a mobile node according to the conventional IPv6 standard;
FIG. 6 is a schematic representation of a network system performing a return routability (RR) procedure according to an embodiment of the present invention;
FIG. 7 is a schematic representation of a configuration of a route selecting apparatus according to an embodiment of the present invention;
FIG. 8 is a schematic representation of a format of an IPv6 packet according to RFC 2460;
FIG. 9 is a schematic representation of a mobility header according to RFC 3775;
FIG. 10 is a schematic representation of a format of a HoTI message according to RFC 3775;
FIG. 11 is a schematic representation of a format of a CoTI message according to RFC 3775;
FIG. 12 is a schematic representation of a format of a mobility options field according to RFC 3775;
FIG. 13 is a schematic representation of a format of an option field according to an embodiment of the present invention;
FIG. 14 is a schematic representation of a format of a HoT message according to RFC 3775;
FIG. 15 is a schematic representation of a format of a CoT message according to RFC 3775;
FIG. 16 is a schematic representation of a configuration of a message relaying apparatus according to an embodiment of the present invention;
FIG. 17 is a schematic representation of a configuration of a reply message transmitting apparatus according to an embodiment of the present invention; and
FIGS. 18, 19 and 20 are flowcharts illustrating a communication method according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

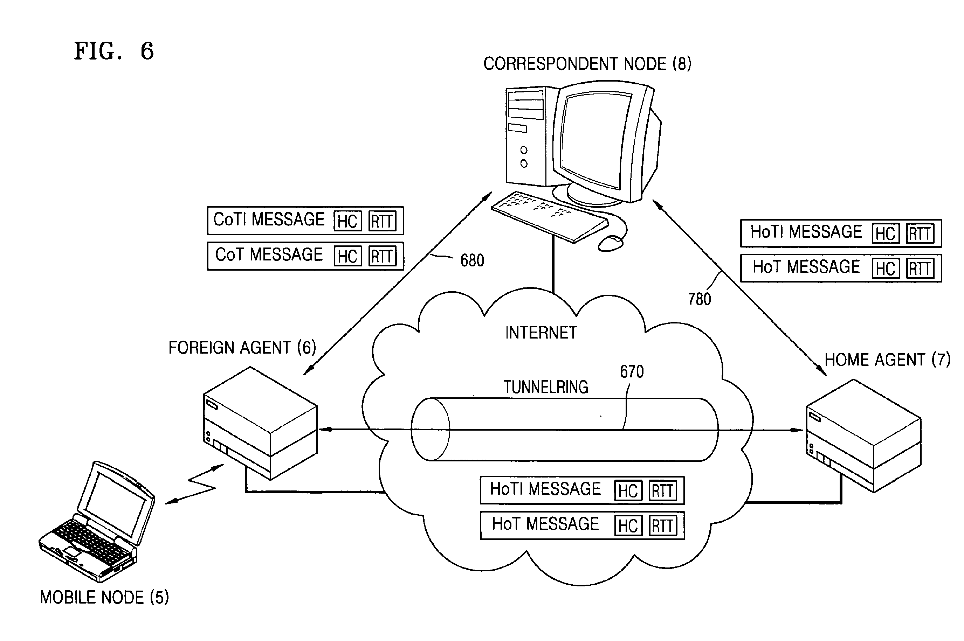

FIG. 6 is a schematic representation of a network system performing a return routability (RR) procedure according to an embodiment of the present invention. Referring to FIG. 6, the network system includes a mobile node 5, a foreign agent 6, a home agent 7, and a correspondent node 8.

The mobile node 5 frequently changes network access locations. The foreign agent 6 is a router in a foreign link and assigns a care-of address (COA) to the mobile node 5, which has moved to the foreign link from a home link. The home agent 7 is a router in the home link and assigns a home address to the mobile node 5. By managing the binding of the COA and the home address, the home agent 7 receives a packet whose destination is the mobile node 5 and tunnels the packet to the mobile node 5. The correspondent node 8 communicates with the mobile node 5. According to the present embodiment, predetermined options fields are inserted into a home test init (HoTI) message, a home test (HoT) message, a care-of test init (CoTI) message, and a care-of test (CoT) message. Thus, the mobile node 5 can choose the most efficient route between a roundabout route 670 and 780 between the mobile node 5 and the correspondent node 8 via the home agent 7 and a direct route 680 between the mobile node 5 and the correspondent node 8 without using the home agent 7.

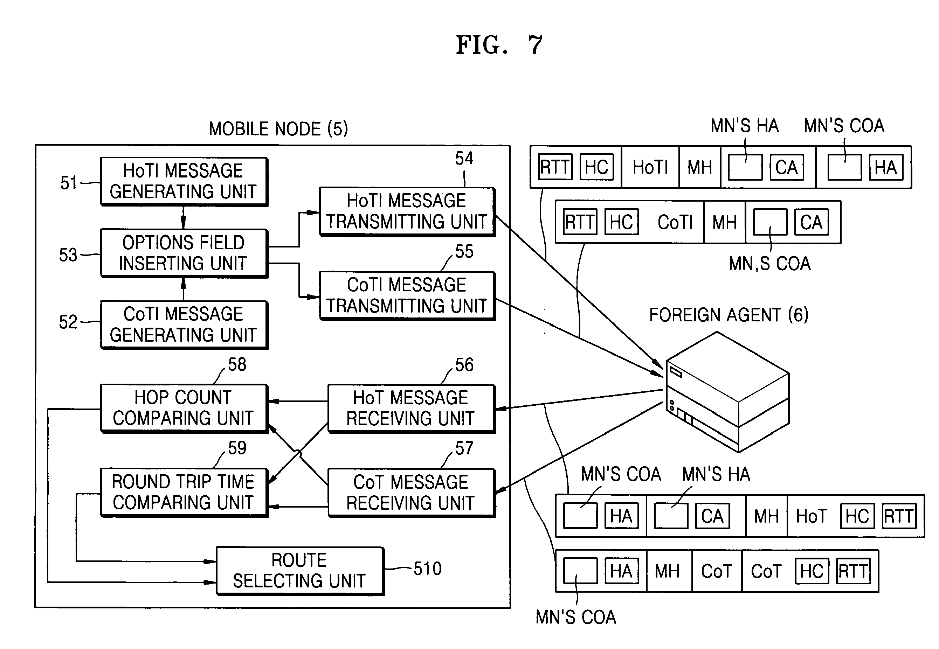

FIG. 7 is a schematic representation of a configuration of a route selecting apparatus according to an embodiment of the present invention. Referring to FIG. 7, the route selecting apparatus may be installed in a mobile node, such as the mobile node 5 illustrated in FIG. 6. The route selecting apparatus includes a HoTI message generating unit 51, a CoTI message generating unit 52, an options field inserting unit 53, a HoTI message transmitting unit 54, a CoTI message transmitting unit 55, a HoT message receiving unit 56, a CoT message receiving unit 57, a hop count comparing unit 58, a round trip time comparing unit 59, and a route selecting unit 510.

The HoTI message generating unit 51 generates a HoTI message in the RR procedure specified in Request for Comments (RFC) 3775. The RR procedure is a procedure for testing communications between the mobile node 5 and the correspondent node 8 before the mobile node 5 and the correspondent node 8 actually start to communicate with each other. In the RR procedure, it is determined whether the correspondent node 8 can communicate with the mobile node 5 using the home address and the COA of the mobile node 5.
The HoTI message is for testing communications between the mobile node 5 and the correspondent node 8. The HoTI message is used to determine whether the correspondent node 8 can communicate with the mobile node 5 using the home address of the mobile node 5.

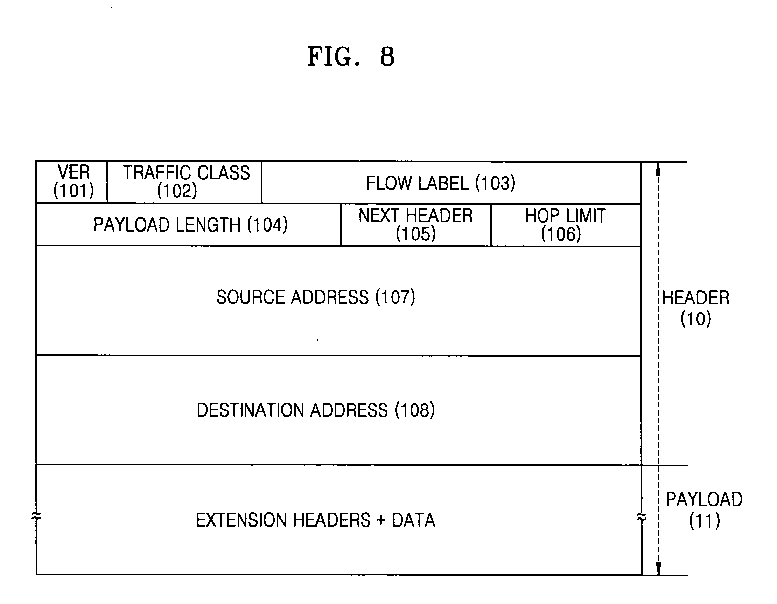

FIG. 8 is a schematic representation of a format of an IPv6 packet according to RFC 2460. Referring to FIG. 8, the IPv6 packet according to RFC 2460 includes a header 10 and a payload 11. The header 10 of the IPv6 packet, i.e., IPv6 header, includes a version field 101, a traffic class field 102, a flow label field 103, a payload length field 104, a next header field 105, a hop limit field 106, a source address field 107, and a destination address field 108. The payload 11 of the IPv6 packet includes extension headers and data. The header 10 must include all of the fields described above while the payload 11 may not include the extension headers and the data.

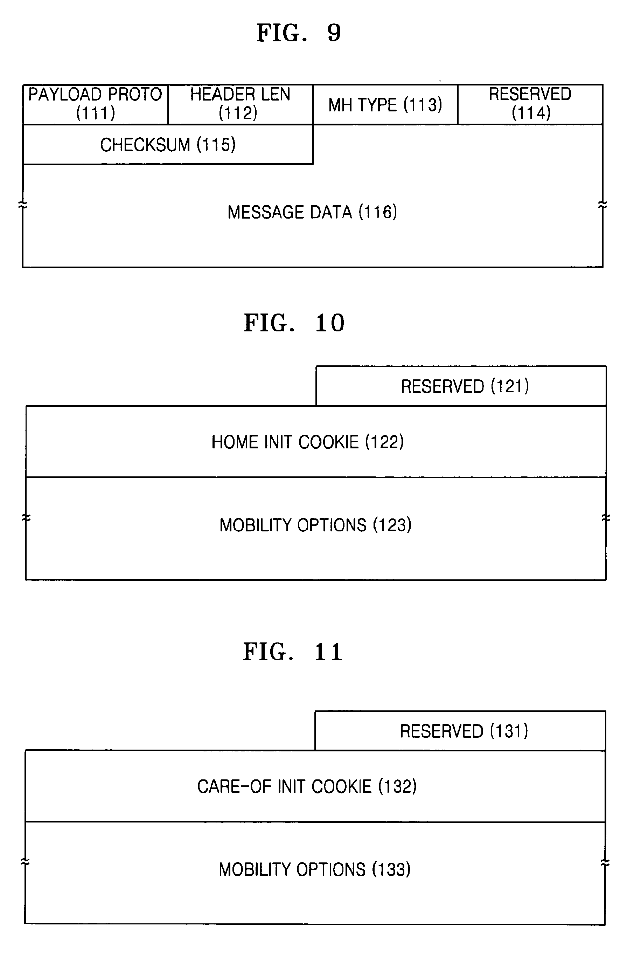

FIG. 9 is a schematic representation of a mobility header according to RFC 3775. Referring to FIG. 9, the mobility header according to RFC 3775 includes a payload protocol field 111, a header length field 112, a mobility header type field 113, a reserved field 114, a checksum field 115, and a message data field 116. The mobility header is one among the extension headers of the IPv6 packet and is recorded in the payload 11 illustrated in FIG. 8.

FIG. 10 is a schematic representation of a format of a HoTI message according to RFC 3775. Referring to FIG. 10, the HoTI message according to RFC 3775 includes a reserved field 121, a home init (HI) cookie field 122, and a mobility options field 123. The HoTI message is recorded in the message data field 116 illustrated in FIG. 9. The HoTI message generating unit 51 generates the HoTI message according to the format illustrated in FIG. 10.

The CoTI message generating unit 52 generates a CoTI message in the RR procedure specified in RFC 3775. The CoTI message is for testing communications between the mobile node 5 and the correspondent node 8. The CoTI message is used to determine whether the correspondent node 8 can communicate with the mobile node 5 using the COA of the mobile node 5.

FIG. 11 is a schematic representation of a format of a CoTI message according to RFC 3775. Referring to FIG. 11, the CoTI message according to RFC 3775 includes a reserved field 131, a care-of init (CI) cookie field 132, and a mobility options field 133. The CoTI message is recorded in the message data field 116 illustrated in FIG. 9. The CoTI message generating unit 52 generates the CoTI message according to the format illustrated in FIG. 11.

The options field inserting unit 53 inserts options fields for measuring values that change according to routes between the mobile node 5 and the correspondent node 8 into the HoTI message generated by the HoTI message generating unit 51 and the CoTI message generated by the CoTI message generating unit 52.

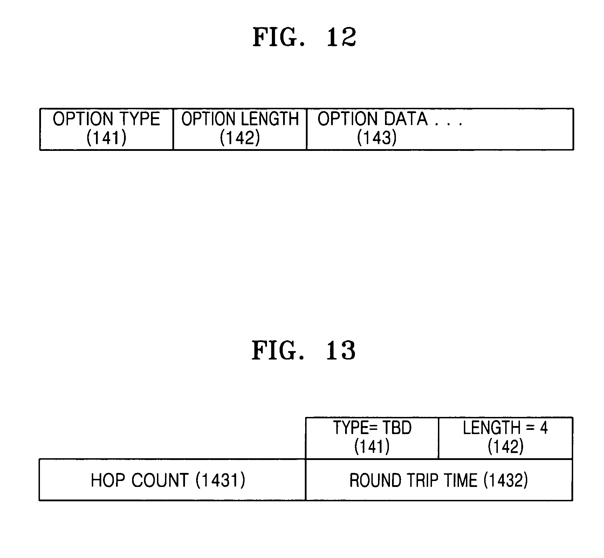

FIG. 12 is a schematic representation of a format of a mobility options field according to RFC 3775. Referring to FIG. 12, the mobility options field according to RFC 3775 includes an option type field 141, an option length field 142, and an option data field 143.

An 8-bit identifier indicating the mobility option type is recorded in the option type field 141. An 8-bit constant indicating the length of the mobility options field without the option type field 141 and the option length field 142 is recorded in the option length field 142. Data regarding an option determined according to a value of the option type field 141 is recorded in the option data field 143.

FIG. 13 is a schematic representation of a format of an options field according to an embodiment of the present invention. Referring to FIG. 13, the options field includes an option type field 141, an option length field 142, a hop count field 1431, and a round trip time field 1432. The options field is used to select an optimal route between the mobile node 5 and the correspondent node 8 and is based on the format of the mobility options field illustrated in FIG. 12.

An 8-bit identifier indicating a mobility option type according to the present embodiment is recorded in the option type field 141. An 8-bit constant indicating the length of a mobility options field according to the present embodiment is recorded in the option length field 142. The hop count field 1431 records a hop count, which is a value that is increased whenever the HoTI message or the CoTI message passes through a node on routes between the mobile node 5 and the correspondent node 8.

The round trip time field 1432 records a value for measuring a round trip time, which is the time taken for the HoTI message or the CoTI message to make a round trip between the mobile node 5 and correspondent node 8.

In other words, the options field inserting unit 53 inserts options fields having the format illustrated in FIG. 13 into the HoTI message generated by the HoTI message generating unit 51 and the CoTI message generated by the CoTI message generating unit 52. When inserting the options fields, the options field inserting unit 53 records a maximum hop count, for example, 64, in the hop count field 1431 and the current time of an operating system (OS) timer in the round trip time field 1432. Since 64 is generally recorded in the hop limit field 106 of the header 10, 64 is recorded in the hop count field 1431. In addition, the reason why the current time of the OS timer is recorded in the round trip time field 1432 is that the OS timer can accurately measure time since it has a less than 10µsec resolution.

According to an embodiment, a hop count for the roundabout route between the mobile node 5 and the correspondent node 8 via the home agent 7, which includes the first portion 670 and the second portion 780, is recorded in the hop count field 1431 inserted into the HoTI message. A value for measuring the round trip time for the roundabout route is recorded in the round trip time field 1432 inserted into the HoTI message. In addition, a hop count for the direct route 680 between the mobile node 5 and the correspondent node 8 is recorded in the hop count field 1431 inserted into the CoTI message. A value for measuring the round trip time for the direction route 680 is recorded in the round trip time field 1432 inserted into the CoTI message.

The HoTI message transmitting unit 54 transmits the HoTI message including the options fields inserted by the options field inserting unit 53 to the home agent 7 via the first portion 670 of the roundabout route. The HoTI message transmitted from the HoTI message transmitting unit 54 has the format illustrated in FIGS. 8, 9, 10, 12, and 13. Since the first portion 670 of the roundabout route is a tunnel ring section, the HoTI message has two IPv6 headers, i.e., an external IPv6 header and an internal IPv6 header.
In other words, the COA of the mobile node 5 is recorded in the source address field of the external IPv6 header of the HoTI message and the address of the home agent 7 is recorded in the address field of the destination address field of the external IPv6 header. Also, the home address of the mobile node 5 is recorded in the source address field of the internal IPv6 header and the address of the correspondent node 8 is recorded in the destination address field of the internal IPv6 header.

The CoTI message transmitting unit 55 transmits the CoTI message including the options fields inserted by the options field inserting unit 53 to the home agent 8 via the direct route 680. The CoTI message transmitted from the CoTI message transmitting unit 55 has the format illustrated in FIGS. 8, 9, 11, 12, and 13. In other words, the COA of the mobile node 5 is recorded in the source address field of the IPv6 header of the CoTI message and the address of the correspondent node 8 is recorded in the destination address field of the IPv6 header.

The HoT message receiving unit 56 receives a HoT message, which is a reply message to the HoTI message transmitted from the HoTI message transmitting unit 54, from the home agent 7 via the first portion 670 of the roundabout route.

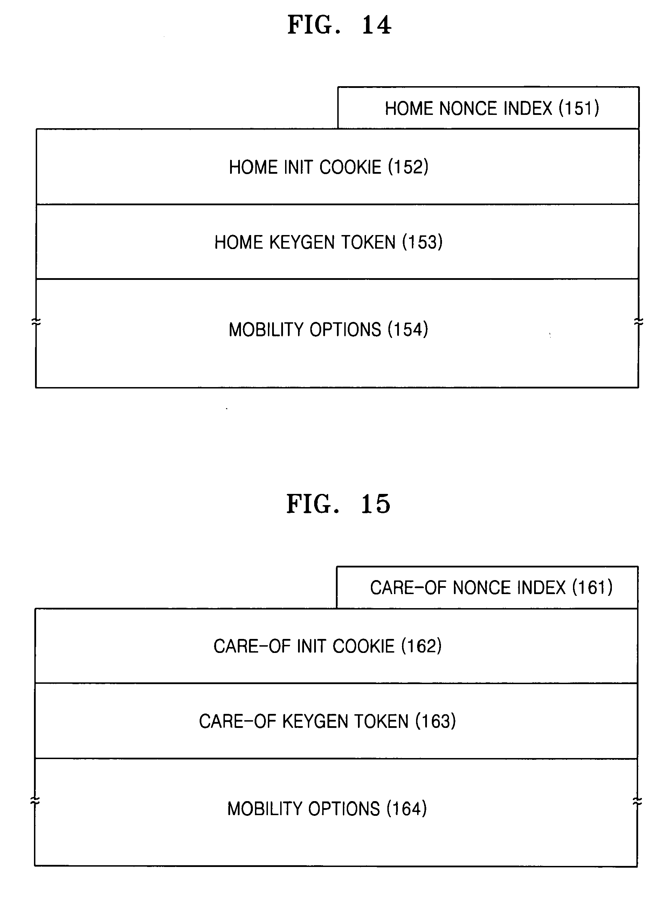

FIG. 14 is a schematic representation of a format of a HoT message according to RFC 3775. Referring to FIG. 14, the HoT message according to RFC 3775 includes a home nonce index field 151, a home init (HI) cookie field 152, a home keygen token field 153, and a mobility options field 154. The HoT message is recorded in the message data field 116 illustrated in FIG. 9.

The HoT message received by the HoTI message receiving unit 56 has the format illustrated in FIGS. 8, 9, 12, 13, and 14. Since the first portion 670 of the roundabout route is a tunnel ring section, the HoT message has two IPv6 headers, i.e., an external IPv6 header and an internal IPv6 header.

In other words, the address of the home agent 7 is recorded in the source address field of the external IPv6 header of the HoT message and the COA of the mobile node 5 is recorded in the destination address field of the external IPv6 header. Also, the address of the correspondent node 8 is recorded in the source address field of the internal IPv6 header and the home address of the mobile node 5 is recorded in the destination address field of the internal IPv6 header.

The CoT message receiving unit 57 receives a CoT message, which is a reply message to the CoTI message transmitted from the CoTI message transmitting unit 55, from the correspondent node 8 via the direct route 680.

FIG. 15 is a schematic representation of a format of a CoT message according to RFC 3775. Referring to FIG. 15, the CoT message according to RFC 3775 includes a care-of nonce index field 161, a care-of init (CI) cookie field 162, a care-of keygen token field 163, and a mobility options field 164. The CoT message is recorded in the message data field 116 illustrated in FIG. 9.

The CoT message received by the CoT message receiving unit 57 has the format illustrated in FIGS. 8, 9, 15, 12, and 13. In other words, the address of the correspondent node 8 is recorded in the source address field of the IPv6 header of the CoT message and the COA of the mobile node 5 is recorded in the destination address field of the IPv6 header.

The hop count comparing unit 58 compares a value of the hop count field inserted into the HoT message received by the HoT message receiving unit 56 with a value of the hop count field inserted into the CoT message received by the CoT message receiving unit 57. In other words, the hop count comparing unit 58 compares the number of nodes on the roundabout route including the first portion 670 and the second portion 780 with the number of nodes on the direction route 680 by comparing the value of the hop count field inserted into the HoT message and the value of the hop count field inserted into the CoT message.

Generally, the number of nodes on the roundabout route is considered to be larger than the number of nodes on the direct route 680. However, the number of nodes on the roundabout route may be smaller than the number of nodes on the direct route 680.

The round trip time comparing unit 59 compares a round trip time obtained based on a value of a round trip field inserted into the HoT message received by the HoT message receiving unit 56 with a round trip time obtained based on a value of a round trip field inserted into the CoT message received by the CoT message receiving unit 57.

In other words, the round trip time comparing unit 59 compares the time taken to make a round trip over the roundabout route with the time taken to make a round trip over the direct route 680 by comparing the round trip time obtained based on the value of the round trip time field inserted into the HoT message with the round trip time obtained based on the value of the round trip time field inserted into the CoT message.

Generally, the time taken to make a round trip over the roundabout route may be considered to be longer than the time taken to make a round trip over the direct route 680. However, the time taken to make a round trip over the roundabout route may be shorter than the time taken to make a round trip over the direct route 680. That is because the number of nodes on the roundabout route may be smaller than the number of nodes on the direct route 680 and/or the performance of the nodes on the roundabout route may be superior to the performance of the nodes on the direct route 680.

The round trip time comparing unit 59 obtains the round trip time over the roundabout route from the difference between the value of the round trip time field inserted into the HoT message received by the HoT message receiving unit 56 and the current time of the OS timer. The time when the HoTI message is transmitted is recorded in the round trip time field inserted into the HoTI message transmitted from the HoTI message transmitting unit 54 and the time when the HoT message, which is the reply message to the HoTI message, is received is recorded in the round trip time field inserted into the HoT message received by the HoT message receiving unit 56. Therefore, the round trip time can be obtained from the difference between the time when the HoTI message is transmitted and the time when the HoT time is received.

The round trip time comparing unit 59 also obtains the round trip time over the direct route 680 from the difference between the value of the round trip time field inserted into the CoT message received by the CoT message receiving unit 57 and the current time of the OS timer.

The route selecting unit 510 selects either the roundabout route including the first portion 670 and the second portion 780 or the direct route 680 based on the result of comparison made by the hop count comparing unit 58 and the result of comparison made by the round trip time comparing unit 59. The route selecting unit 510 selects a route based on network characteristics and/or a user's intention. For example, if the performance of nodes over the network frequently changes, the round trip time may change accordingly. Thus, the route selecting unit 510 may select a route having a smaller number of nodes. In other words, in such a case, the route selecting unit 510 gives priority to the result of the comparison made by the hop count comparing unit 58 over the result of the comparison made by the round trip time comparing unit 59 when selecting a route.

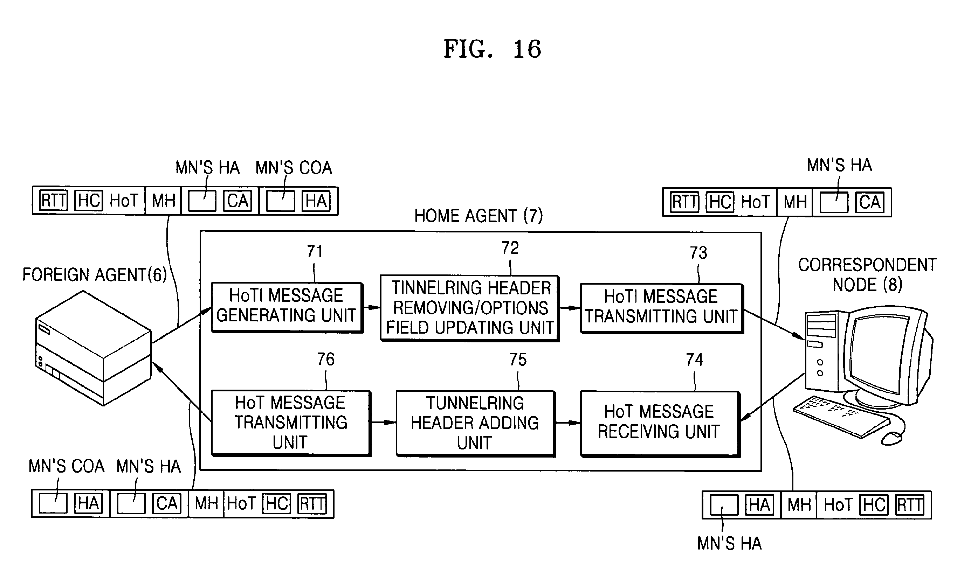

FIG. 16 is a schematic representation of a configuration of a message relaying apparatus according to an embodiment of the present invention. Referring to FIG. 16, the message relaying apparatus may be installed in a home agent, such as the home agent 7 illustrated in FIG. 6. The message relaying apparatus includes a HoTI message receiving unit 71, a tunnel ring header removing/options field updating unit 72, a HoTI message transmitting unit 73, a HoT message receiving unit 74, a tunnel ring header adding unit 75, and a HoT message transmitting unit 76.

The HoTI message receiving unit 71 receives the HoTI message inserted into the hop count field 1431 and the round trip time field 1432 from the mobile node 5 via the first portion 670 of the roundabout route. The HoTI message received by the HoTI message receiving unit 71 has the format illustrated in FIGS. 8, 9, 10, 12, and 13. Since the first portion of the roundabout route is a tunnel ring section, the HoTI message has two IPv6 headers, i.e., an external IPv6 header and an internal IPv6 header.

In other words, the COA of the mobile node 5 is recorded in the source address field of the external IPv6 header of the HoTI message and the address of the home agent 7 is recorded in the address field of the destination address field of the external IPv6 header. Also, the home address of the mobile node 5 is recorded in the source address field of the internal IPv6 header and the address of the correspondent node 8 is recorded in the destination address field of the internal IPv6 header.

The tunnel ring header removing/options field updating unit 72 removes the external IPv6 header corresponding to a tunnel ring header from the HoTI message received by the HoTI message receiving unit 71 and updates a hop count in the hop count field 1431 inserted into the HoTI message to a value of the hop limit field of the external IPv6 header of the HoTI message. While the HoTI message is transmitted from the mobile node to the home agent 7, values of the fields of the internal IPv6 header remain unchanged. Therefore, to reflect the number of nodes over the first portion 670 of the roundabout route, the hop count of the hop count field 1431 inserted into the HoTI message must be updated to the value of the hop limit field of the external IPv6 header.

The HoTI message transmitting unit 73 transmits the same kind of message as the HoTI message received by the HoTI message receiving unit 71, that is, the HoTI message having the external IPv6 header removed by the tunnel ring header removing/options field updating unit 72 and the hop count of the hop count field 1431 updated, to the correspondent node 8 via the second portion 780 of the roundabout route. The HoTI message transmitted from the HoTI message transmitting unit 73 has the format illustrated in FIGS. 8, 9, 10, 12, and 13. In other words, the home address of the mobile node 5 is recorded in the source address field of the IPv6 header of the HoTI message and the address of the correspondent node 8 is recorded in the destination address field of the IPv6 header.

The HoT message receiving unit 74 receives the HoT message, which is a reply message to the HoTI message transmitted from the HoTI message transmitting unit 73, from the correspondent node 8 via the second portion 780 of the roundabout route. The HoT message received by the HoTI message receiving unit 74 has the format illustrated in FIGS. 8, 9, 12, 13, and 14. In other words, the address of the correspondent node 8 is recorded in the source address field of the IPv6 header of the HoT message and the home address of the mobile node 5 is recorded in the destination address field of the IPv6 header.

The tunnel ring header adding unit 75 adds an external Ipv6 header corresponding to a tunnel ring header to the HoT message received by the HoT message receiving unit 74. Unlike when the HoTI message is transmitted, options fields are not updated when the HoT message is received because a transmitting route and a receiving route are same. Thus, there is no need to measure the hop count again in a receiving process.

The HoT message transmitting unit 76 transmits the same kind of message as the HoT message received by the HoT message receiving unit 74, that is, the HoT message having the external IPv6 header added by the tunnel ring header adding unit 75, to the mobile node 5 via the first portion 670 of the roundabout route. The HoT message transmitted from the HoT message transmitting unit 76 has the format illustrated in FIGS. 8, 9, 14, 12, and 13. Since the first portion 670 of the roundabout route is a tunnel ring section, the HoT message has two IPv6 headers, i.e., an external IPv6 header and an internal IPv6 header.

In other words, the address of the home agent 7 is recorded in the source address field of the external IPv6 header of the HoT message and the COA of the mobile node 5 is recorded in the destination address field of the external IPv6 header. Also, the address of the correspondent node 8 is recorded I the source address field of the internal IPv6 header and the home address of the mobile node 5 is recorded in the destination address field of the internal IPv6 header.

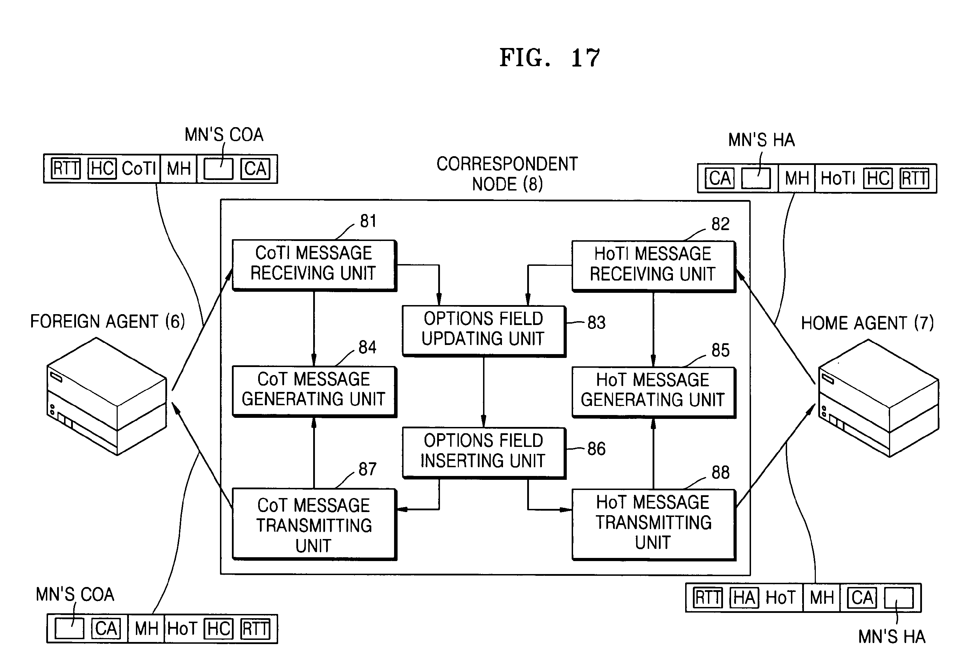

FIG. 17 is a schematic representation of a configuration of a reply message transmitting apparatus according to an embodiment of the present invention. Referring to FIG. 17, the reply message transmitting apparatus may be installed in a correspondent node, such as the correspondent node 8 illustrated in FIG. 6. The reply message transmitting apparatus includes a CoTI message receiving unit 81, a HoTI message receiving unit 82, an options field updating unit 83, a CoT message generating unit 84, a HoT message generating unit 85, an options field inserting unit 86, a CoT message transmitting unit 87, and a HoT message transmitting unit 88.

The CoTI message receiving unit 81 receives a CoTI message inserted into the hop count field 1431 and the round trip time field 1432 from the mobile node 5 via the direct route 680. The CoTI message received by the CoTI message receiving unit 81 has the format illustrated in FIGS. 8, 9, 11, 12, and 13. In other words, the COA of the mobile node 5 is recorded in the source address field of the IPv6 header of the CoTI message ad the address of the correspondent node 8 is recorded in the destination address field of the IPv6 header.

The HoTI message receiving unit 82 receives a HoTI message inserted into the hop count field 1431 and the round trip time field 1432 from the home agent 7 via the second portion of the roundabout route. The HoTI message received by the HoTI message receiving unit 71 has the format illustrated in FIGS. 8, 9, 10, 12, and 13. In other words, the home address of the mobile node 5 is recorded in the source address field of the IPv6 header of the HoTI message and the address of the correspondent node 8 is recorded in the destination address field of the IPv6 header.

The options field updating unit 83 updates a hop count of the hop count field 1431 inserted into the CoTI message to a value of the hop limit field of the IPv6 header of the CoTI message received by the CoTI message receiving unit 81 and updates a hop count of the hop count field 1431 inserted into the HoTI message to the value of the hop limit field of the IPv6 header of the HoTI message received by the HoTI message receiving unit 82.

The CoT message generating unit 84 generates a CoT message in the RR procedure specified in RFC 3775 according to the format illustrated in FIG. 15 as a reply message to the CoTI message received by the CoTI message receiving unit 81.

The HoT message generating unit 85 generates a HoT message in the RR procedure specified in RFC 3775 according to the format illustrated in FIG. 14 as a reply message to the HoTI message received by the HoTI message receiving unit 82.

The options field inserting unit 86 inserts the hop count field 1431 having a hop count updated by the options field updating unit 83 and the round trip time field 1432 into the CoT message generated by the CoT message generating unit 84. In addition, the options field inserting unit 86 inserts the hop count field 1431 having the hop count updated by the options field updating unit 83 and the round trip time field 1432 into the HoT message generated by the HoT message generating unit 85.

The CoT message transmitting unit 87 transmits the CoT message including options fields inserted by the options field inserting unit 86 to the mobile node 5 via the direct route 680. The CoT message transmitted from the CoT message transmitting unit 87 has the format illustrated in FIGS. 8, 9, 15, 12, and 13. In other words, the address of the correspondent node 8 is recorded in the source address field of the IPv6 header of the CoT message and the COA of the mobile node 5 is recorded in the destination address field of the IPv6 header.

The HoT message transmitting unit 88 transmits the HoT message including options fields inserted by the options field inserting unit 86 to the home agent 7 via the first portion 670 of the roundabout route. The HoT message transmitted from the HoT message transmitting unit 88 has the format illustrated in FIGS. 8, 9, 14, 12, and 13. In other words, the address of the correspondent node 8 is recorded in the source address field of the IPv6 header of the HoT message and the home address of the mobile node 5 is recorded in the destination address field of the IPv6 header.

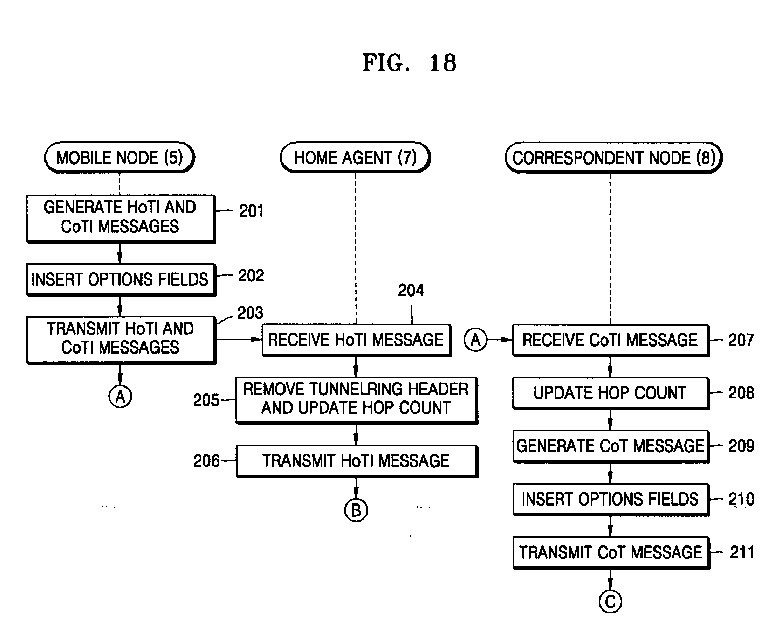

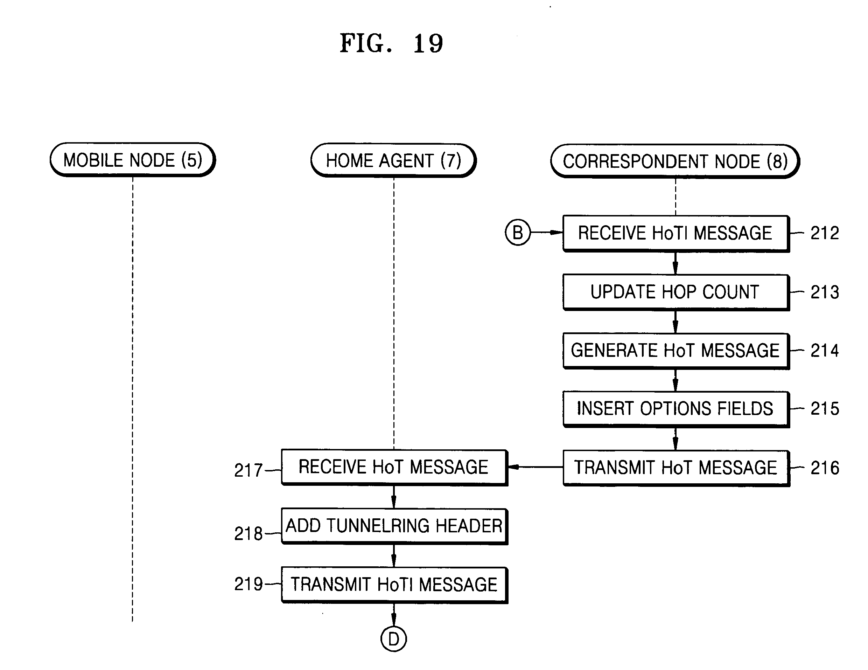

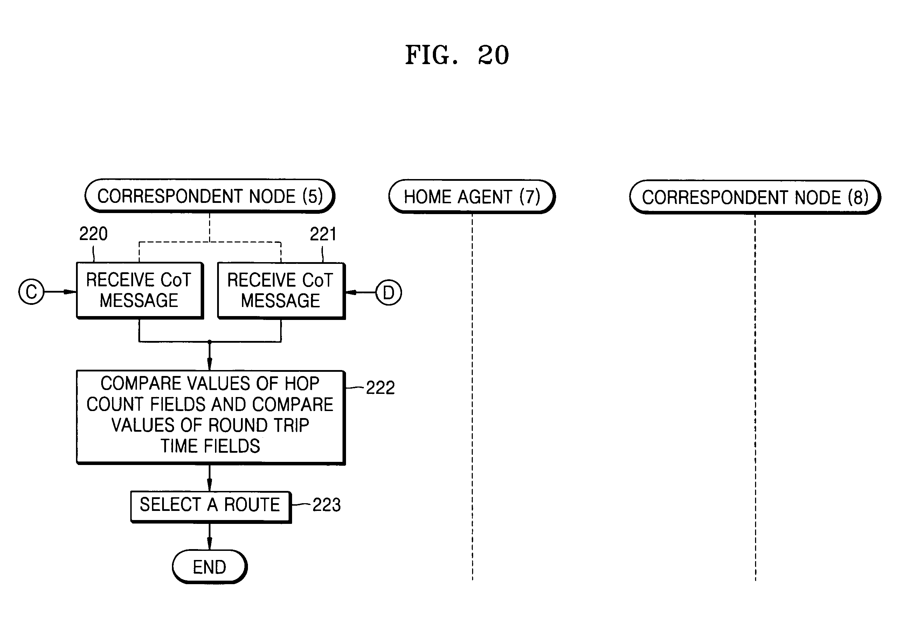

FIGS. 18, 19 and 20 are flowcharts illustrating a communication method according to an embodiment of the present invention. Referring to FIG. 18, the communication method is composed of the following operations, which are sequentially performed by a network system, such as the network system of FIG. 6, that is, the mobile node 5, the home agent 7, and the correspondent node 8. Therefore, the description of the mobile node 5, the home agent 7 and the correspondent node 8 made above, though some of it may be omitted below, may be relevant to the communication method.

In operation 201, the mobile 5 generates a HoTI message in the RR procedure specified in RFC 3775 and a CoTI message in the RR procedure specified in RFC 3775. In operation 202, the mobile node 5 inserts options fields, i.e., the hop count field 1431 and the round time field 1432, for measuring values changed according to routes between the mobile node 5 and the correspondent node 8 into the HoTI message and the CoTI message generated in operation 201.

In operation 203, the mobile node 5 transmits the HoTI message having the options fields inserted in operation 202 to the home agent 7 via the first portion 670 of the roundabout route and transmits the CoTI message having the options fields inserted in operation 202 to the correspondent node 7 via the direct route 680. In operation 204, the home agent 7 receives the HoTI message, into which the hop count field 1431 and the round time field 1432 are inserted, from the mobile node 5 via the first portion 670 of the roundabout route. In operation 205, the home agent 7 removes an external IPv6 header corresponding to a tunnel ring header from the HoTI message received in operation 204 and updates a hop count of the hop count field 1431 inserted into the HoTI message to a value of the hop limit field of the external IPv6 header of the HoTI message.

In operation 206, the home agent 7 transmits the same kind of message as the HoTI message received in operation 204, that is, the HoTI message having the external IPv6 header removed and the hop count of the hop count field 1431 updated in operation 205, to the correspondent node 8 via the second portion 780 of the roundabout route. In operation 207, the correspondent node 8 receives the CoTI message, into which the hop count field 1431 and the round trip time field 1432 are inserted, from the mobile node 5 via the direct route 680. In operation 208, the correspondent node 8 updates the hop count of the hop count field 1431 inserted into the CoTI message to a value of the hop limit field of the IPv6 header of the CoTI message received in operation 207.

In operation 209, the correspondent node 8 generates a CoT message in the RR procedure specified in RFC 3775 according to the format illustrated in FIG. 15 as a reply message to the CoTI message received in operation 207. In operation 210, the correspondent node 8 inserts the hop count field 1431 and the round time field 1432 having the hop count updated in operation 208 into the CoT message generated in operation 209. In operation 211, the correspondent node 8 transmits the CoT message having the options fields inserted in operation 210 to the mobile node 5 via the direct route 680.

In operation 212, the correspondent node 8 receives a HoTI message, into which the hop count field 1431 and the round time field 1432 are inserted, from the home agent via the second portion of the roundabout route. In operation 213, the correspondent node 8 updates the hop count of the hop count field 1431 inserted into the HoTI message to a value of the hop limit field of the IPv6 header of the HoTI message received in operation 212. In operation 214, the correspondent node 8 generates a HoT message in the RR procedure specified in RFC 3775 according to the format illustrated in FIG. 14 as a reply message to the HoTI message received in operation 212.

In operation 215, the correspondent node 8 inserts the hop count field 1431 and the round time field 1432 having the hop count updated in operation 213 into the HoT message generated in operation 214. In operation 216, the correspondent node 8 transmits the HoT message having the options fields inserted in operation 215 to the home agent 7 via the first portion 670 of the roundabout route.

In operation 217, the home agent 7 receives the HoT message transmitted from the correspondent in operation 216 via the second portion 780 of the roundabout route. In operation 218, the home agent 7 adds an external IPv6 header corresponding to the tunnel ring header to the HoT message received in operation 217. In operation 219, the home agent 7 transmits the same kind of message as the HoT message received in operation 217, that is the HoT message having the IPv6 header added in operation 218, to the mobile node 5 via the first portion 670 of the roundabout route.

In operation 220, the mobile node 5 receives the CoT message transmitted in operation 211 from the correspondent node 8 via the direct route 680. In operation 221, the mobile node receives the HoT message transmitted in operation 219 from the home agent 7 via the first portion of the roundabout route.

In operation 222, the mobile node 5 compares a value of the hop count field inserted into the HoT message received in operation 220 with a value of the hop count field inserted into the CoT message received in operation 221. In addition, the mobile node 5 compares a round trip time obtained based on a value of a round trip field inserted into the HoT message received in operation 221 with a round trip time obtained based on a value of a round trip field inserted into the CoT message received in operation 220.

In operation 223, the mobile node 5 selects the roundabout route including the first portion 670 and the second portion 780 or the direct route 680 based on the result of the comparison in operation 222.

According to the present invention, a mobile node and a correspondent node do not always communicate directly with each other. The mobile node and the correspondent node can select an efficient route taking into consideration hop counts and round trip times and communicate with each other through the selected route. Since a roundabout route via a home agent is used in addition to a direct route between the mobile node and the correspondent node, network resources can be efficiently distributed and a faster communication environment can be established.

Further, according to the present invention, since the roundabout route via the home agent is used in addition to the direct route between the mobile node and the correspondent node, the load of the mobile node whose system performance is not high can be reduced as well as the load of the correspondent node corresponding to a server that a plurality of nodes access.

The embodiments of the present invention can be written as computer programs and can be implemented in general-use digital computers that execute the programs using a storage such as a computer readable recording medium. Examples of the computer-readable recording medium include magnetic storage media (e.g., read-only memory (ROM), floppy disks, hard disks, etc.), optical recording media (e.g., CD-ROMs or DVDs), and storage media such as carrier waves (e.g., transmission through the Internet).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A route selecting method comprising:
transmitting messages, which messages test communications between a mobile node (5) and a correspondent node (8) and into which messages options fields to measure values changed according to routes (670,680,780) between the mobile node (5) and the correspondent node (8) are inserted, via the routes (670,680,780);
receiving reply messages to the transmitted messages via the routes (670,680,780); and
selecting any one of the routes (670,680,780) based on values of the options fields inserted into the received reply messages.

2. The method of claim 1, further comprising comparing the values of the options fields inserted into the received reply messages, and in the selecting of any one of the routes (670,680,780), selecting a route having a minimum value as a result of comparing the values of the options fields.

3. The method of claim 1 or claim 2, wherein the values comprise hop counts increased whenever the messages pass through a node on the routes (670,680,780) and in the selecting of any one of the routes (670,680,780), selecting a route having a minimum hop count.

4. The method of any preceding claim, wherein the values comprise round trip times taken for the messages to make round trips over the routes (670,680,780), and in the selecting of any one of the routes (670,680,780), selecting a route having a shortest round trip time.

5. The method of any preceding claim, wherein the values comprise hop counts increased whenever the messages pass through a node on the routes (670,680,780) and the round trip times taken for the messages to make round trips over the routes (670,680,780), and in the selecting of any one of the routes (670,680,780), selecting a route based on the hop counts and the round trip times of the routes (670, 680, 780).

6. The method of any preceding claim, wherein the messages comprise a home test init message and a care-of test init message in a return routability procedure as specified in Request for Comments 3775, and the reply messages comprise a home test message and a care-of test message in the return routability procedure.

7. A route selecting apparatus comprising:
a message transmitting unit (54/55) operable to transmit messages, which messages test communications between a mobile node (5) and a correspondent node (8) and into which messages options fields to measure values changed according to routes (670,680,780) between the mobile node (5) and the correspondent node (8) are inserted, via the routes (670,680,780);
a message receiving unit (56/57) operable to receive reply messages to the messages transmitted from the message transmitting unit (54/55) via the routes (670,680,780); and
a route selecting unit (510) operable to select any one of the routes (670,680,780) based on values of the options fields inserted into the reply messages received by the message receiving unit (56/57).

8. A computer-readable storage medium for controlling a computer according to a route selecting method, the route selecting method comprising:
transmitting messages, which messages test communications between a mobile node (5) and a correspondent node (8) and into which messages options fields to measure values changed according to routes (670,680,780) between the mobile node (5) and the correspondent node (8) are inserted, via the routes (670,680,780);
receiving reply messages to the transmitted messages via the routes (670,680,780); and
selecting any one of the routes (670,680,780) based on values of the options fields inserted into the received reply messages.

9. A message relaying method comprising:
receiving messages, which messages test communications between a mobile node (5) and a correspondent node (8) and into which messages options fields to measure values changed according to routes (670,680,780) between the mobile node (5) and the correspondent node (8) are inserted, via a first portion of a predetermined route;
transmitting the same kind of messages as the received messages via a second portion of the predetermined route;
receiving reply messages to the transmitted messages via the second portion of the predetermined route; and
transmitting the received reply messages as reply messages to the messages via the first portion of the predetermined route.

10. The method of claim 9, further comprising updating hop counts of the options fields inserted into the messages to a value of a hop limit field of an Internet protocol version 6 header, wherein the values changed according to routes (670,680,780) between the mobile node (5) and the correspondent node (8) are hop counts increased whenever the messages pass through a node on the routes (670,680,780), the messages, into which options fields having the hop counts updated as much as the first portion of the predetermined route are inserted, are transmitted in the transmitting of the same kind of messages, and the reply messages, into which options fields having hop counts updated again as much as the second portion of the predetermined route are inserted, are transmitted in the transmitting of the received reply messages.

11. A message relaying apparatus comprising:
a message receiving unit (56/57) operable to receive messages, which messages are adapted to test communications between a mobile node (5) and a correspondent node (8) and into which messages options fields to measure values changed according to routes (670,680,780) between the mobile node (5) and the correspondent node (8) are inserted, via a first portion of a predetermined route;
a message transmitting unit (54/55) operable to transmit the same kind of messages as the messages received by the message receiving unit (56/57) via a second portion of the predetermined route;
a reply message receiving unit (56/57) operable to receive reply messages to the transmitted messages from the message transmitting unit (54/55) via the second portion of the predetermined route; and
a reply message transmitting unit (54/55) operable to transmit the reply messages received by the reply message receiving unit (56/57) as reply messages to the messages via the first portion of the predetermined route.

12. A computer-readable storage medium for controlling a computer according to a message relaying method, the message relaying method comprising:
receiving messages, which messages test communications between a mobile node (5) and a correspondent node (8) and into which messages options fields to measure values changed according to routes (670,680,780) between the mobile node (5) and the correspondent node (8) are inserted, via a first portion of a predetermined route;
transmitting the same kind of messages as the received messages via a second portion of the predetermined route;
receiving reply messages to the transmitted messages via the second portion of the predetermined route; and
transmitting the received reply messages as reply messages to the messages via the first portion of the predetermined route.

13. A reply message transmitting method comprising:
receiving messages, which messages test communications between a mobile node (5) and a correspondent node (8) and into which messages options fields to measure values changed according to routes (670,680,780) between the mobile node (5) and the correspondent node (8) are inserted, via the routes (670,680,780); and
transmitting reply messages to the received messages.

14. The method of claim 13, further comprising updating hop counts of the options fields inserted into the messages to a value of a hop limit field of an Internet protocol version 6 header, wherein the values changed according to routes (670,680,780) between the mobile node (5) and the correspondent node (8) comprise the hop counts increased whenever the messages pass through a node on the routes (670,680,780), and the reply messages, into which options fields having the updated hop counts are inserted, are transmitted in the transmitting of the reply messages.

15. A reply message transmitting apparatus comprising:
a message receiving unit (56/57) operable to receive messages, which messages are adapted to be used to test communications between a mobile node (5) and a correspondent node (8) and into which messages options fields to measure values changed according to routes (670,680,780) between the mobile node (5) and the correspondent node (8) are inserted, via the routes (670,680,780); and
a reply message transmitting unit (54/55) operable to transmit reply messages to the messages received by the message receiving unit (56/57).

16. A computer-readable storage medium for controlling a computer according to a reply message transmitting method, the reply message transmitting method comprising:
receiving messages, which messages test communications between a mobile node (5) and a correspondent node (8) and into which messages options fields that measure values changed according to routes (670,680,780) between the mobile node (5) and the correspondent node (8) are inserted, via the routes (670,680,780); and
transmitting reply messages to the received messages.

17. A communication method comprising:
transmitting messages, which messages test communications between a mobile node (5) and a correspondent node (8) and into which messages options fields that measure values changed according to routes (670,680,780) between the mobile node (5) and the correspondent node (8) are inserted, via the routes (670,680,780);
receiving the transmitted messages, updating values of options fields of the received messages, and transmitting reply messages including the options fields having the updated values via the routes (670,680,780); and
selecting any one of the routes (670,680,780) based on the updated values of the options fields inserted into the transmitted reply messages.

18. A computer-readable storage medium for controlling a computer according to a communication method, the communication method comprising:
transmitting messages, which messages test communications between a mobile node (5) and a correspondent node (8) and into which messages options fields that measure values changed according to routes (670,680,780) between the mobile node (5) and the correspondent node (8) are inserted, via the routes (670,680,780);
receiving the transmitted messages, updating values of options fields of the received messages, and transmitting reply messages including the options fields having the updated values via the routes (670,680,780); and
selecting any one of the routes (670,680,780) based on the updated values of the options fields inserted into the transmitted reply messages.

19. A method, comprising:
transmitting messages at least between a mobile node (5) and a correspondent node (8) among a plurality of routes (670,680,780); and
selecting a preferred path among the plurality of paths based on values comprised by the messages.

20. The method of claim 19, wherein the selecting operation comprises selecting a preferred path among the plurality of paths based on at least one of hop counts and transmission time.
